# EUROPEAN PATENT APPLICATION

(11) **EP 4 818 920 A1**
(43) Date of publication of application: **07.10.2026**
(21) Application number: 24902392.0
(22) Date of filing: 29.10.2024
(51) Int. Cl.: G06F 16/242

(54) **METHOD FOR SQL ENGINE TO EXECUTE SECURITY POLICY, AND SQL ENGINE**

(30) Priority: 15.12.2023 CN 202311733024; 23.01.2024 CN 202410095005
(71) Applicant: Huawei Cloud Computing Technologies Co., Ltd., Gui'an New District, Guizhou 550025 (CN)
(72) Inventor: WU, Wenbo, Guiyang, Guizhou 550025 (CN); FU, Dunhui, Guiyang, Guizhou 550025 (CN); GUO, Jincheng, Guiyang, Guizhou 550025 (CN); LI, Xiantao, Guiyang, Guizhou 550025 (CN)
(74) Representative: Goddar, Heinz J.
(86) International application number: PCT/CN2024/128171
(87) International publication number: WO 2025/123968

(57) **Abstract**

This application provides a method for executing a security policy by an SQL engine. The method is applied to a database system. The database system includes a database and at least one SQL engine. The at least one SQL engine is configured to obtain, based on an SQL statement, data stored in the database. The method includes: The SQL engine obtains first configuration information, where the first configuration information indicates at least one software source corresponding to each of different types of security policy configurations for execution on the SQL engine, and the at least one software source corresponding to each of the different types of security policies is not completely the same. The SQL engine protects, based on the first configuration information, security and/or privacy of data stored in the database by executing the corresponding security policies provided by the different software sources indicated in the first configuration information. The method can make the data security system more flexible, thereby improving user experience.

## Description

This application claims priorities to Chinese Patent Application No. 202311733024.3, filed with the China National Intellectual Property Administration on December 15, 2023 and entitled "METHOD FOR USING SQL ENGINE AND COMPUTE DEVICE", and to Chinese Patent Application No. 202410095005.0, filed with the China National Intellectual Property Administration on January 23, 2024 and entitled "METHOD FOR EXECUTING SECURITY POLICY BY SQL ENGINE AND SQL ENGINE", both of which are incorporated herein by reference in their entireties.

### TECHNICAL FIELD

This application relates to the field of databases, and more specifically, to a method for executing a security policy by a structured query language SQL engine, an SQL engine, and a compute device.

### BACKGROUND

At present, ensuring data security and privacy is extremely important for enterprise-level applications. As a bottom-layer computing engine in a data stack, an engine (for example, an SQL engine) in a database system must ensure that data is accessible only to authorized personnel, preventing data leakage and misuse. Specifically, a data security policy is configured for the SQL engine, so that the SQL engine can protect data security and privacy according to the configured data security policy.

In related technical solutions, for an SQL engine, if the SQL engine relies on software (for example, Apache Ranger) that provides data security policies, all data security policies configured on the SQL engine must depend on that software (for example, Apache Ranger). This makes the current data security system relatively rigid and reduces user experience.

In view of this, how to make the data security system more flexible to improve user experience becomes a technical problem that needs to be urgently resolved.

### SUMMARY

This application provides a method for executing a security policy by an SQL engine. The method can make the data security system flexible, thereby improving user experience.

According to a first aspect, a method for executing a security policy by an SQL engine is provided. The method is applied to a database system. The database system includes a database and at least one SQL engine. The at least one SQL engine is configured to obtain, based on an SQL statement, data stored in the database. The method includes: Each SQL engine obtains first configuration information, where the first configuration information indicates at least one software source corresponding to each of different types of security policy configurations for execution on the SQL engine, and the at least one software source corresponding to each of the different types of security policies is not completely the same. The SQL engine protects, based on the first configuration information, security and/or privacy of data stored in the database by executing the corresponding security policies provided by the different software sources indicated in the first configuration information.

In the foregoing technical solution, the SQL engine may be enabled to flexibly use data security policies provided by different software, and a strong binding relationship between all types of data security policies on the SQL engine and one piece of software is avoided, so that a data security system is flexible, thereby improving user experience.

With reference to the first aspect, in some implementations of the first aspect, the SQL engine obtains the first configuration information in at least one of the following manners: an interface of the SQL engine, a configuration file of the SQL engine, or a visual configuration interface of the SQL engine.

With reference to the first aspect, in some implementations of the first aspect, the different types of security policies include a first-type security policy, software sources corresponding to the first-type security policy include first software and second software, and when verification of the first-type security policy respectively provided by the first software and the second software succeeds, the SQL engine determines that the SQL engine has passed security verification against the first-type security policy.

In the foregoing technical solution, multiple security protections may be enforced simultaneously, thereby better protecting data security and/or privacy.

With reference to the first aspect, in some implementations of the first aspect, the method further includes: The SQL engine obtains second configuration information, where the second configuration information is used to configure the SQL engine to execute some or all of the different types of security policies. The SQL engine executes some or all of the different types of security policies based on the received second configuration information.

In the foregoing technical solution, the SQL engine can flexibly use some or all of a plurality of types of security policies, so that a data security system is flexible, thereby improving user experience.

With reference to the first aspect, in some implementations of the first aspect, the different types of security policies include at least two of the following: a data access permission control security policy, a data masking security policy, and a data row-level filtering security policy.

With reference to the first aspect, in some implementations of the first aspect, the software sources include: Ranger, Hive Metastore (Hive Metastore, HMS), and Hive access control list ACL.

With reference to the first aspect, in some implementations of the first aspect, the method is applied to a cloud management platform, the cloud management platform is configured to manage infrastructure that provides a cloud service, the infrastructure includes at least one cloud data center, at least one server is disposed in each cloud data center, and the SQL engine runs on the at least one server.

According to a second aspect, an SQL engine is provided. The SQL engine is located in a database system, the database system further includes a database, the SQL engine is configured to obtain, based on an SQL statement, data stored in the database, and the SQL engine includes an obtaining module and a processing module. The obtaining module is configured to obtain first configuration information, where the first configuration information indicates at least one software source corresponding to each of different types of security policy configurations for execution on the SQL engine, and the at least one software source corresponding to each of the different types of security policies is not completely the same. The processing module is configured to protect, based on the first configuration information, security and/or privacy of data stored in the database by executing the corresponding security policies provided by the different software sources indicated in the first configuration information.

With reference to the second aspect, in some implementations of the second aspect, the obtaining module is further configured to obtain the first configuration information in at least one of the following manners: an interface of the SQL engine, a configuration file of the SQL engine, or a visual configuration interface of the SQL engine.

With reference to the second aspect, in some implementations of the second aspect, the different types of security policies include a first-type security policy, software sources corresponding to the first-type security policy include first software and second software, and the processing module is further configured to: when verification of the first-type security policy respectively provided by the first software and the second software succeeds, determine that the SQL engine has passed security verification against the first-type security policy.

With reference to the second aspect, in some implementations of the second aspect, the obtaining module is further configured to obtain second configuration information, where the second configuration information is used to configure the SQL engine to execute some or all of the different types of security policies; and the processing module is further configured to execute some or all of the different types of security policies based on the second configuration information.

With reference to the second aspect, in some implementations of the second aspect, the different types of security policies include at least two of the following: a data access permission control security policy, a data masking security policy, and a data row-level filtering security policy.

With reference to the second aspect, in some implementations of the second aspect, the software sources include Apache Ranger, Hive Metastore HMS, and Hive access control list ACL.

With reference to the second aspect, in some implementations of the second aspect, the SQL engine runs on at least one server, the at least one server is located in at least one cloud data center, and the at least one server is infrastructure that is managed by a cloud management platform and provides a cloud service.

It should be understood that for beneficial effects of the second aspect and the implementations of the second aspect, refer to the beneficial effects of the first aspect and the implementations of the first aspect. Details are not described herein again.

According to a third aspect, a database system is provided. The database system includes a database and at least one SQL engine according to any one of the second aspect or the implementations of the second aspect, and the at least one SQL engine is configured to obtain, based on an SQL statement, data stored in the database.

According to a fourth aspect, a compute device is provided. The compute device includes a processor and a memory, and optionally, further includes an input/output interface. The processor is configured to control the input/output interface to send and receive information. The memory is configured to store a computer program. The processor is configured to invoke the computer program from the memory and run the computer program, to enable the compute device to perform the method according to any one of the first aspect or the possible implementations of the first aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a fifth aspect, a compute device cluster is provided, and includes at least one compute device. Each compute device includes a processor and a memory. The processor of the at least one compute device is configured to execute instructions stored in the memory of the at least one compute device, to enable the compute device cluster to perform the method according to any one of the first aspect or the possible implementations of the first aspect.

According to a sixth aspect, a chip is provided. The chip obtains instructions and executes the instructions to implement the method according to any one of the first aspect and the implementations of the first aspect.

Optionally, in an implementation, the chip includes a processor and a data interface. The processor reads, through the data interface, instructions stored in a memory, to perform the method according to any one of the first aspect or the implementations of the first aspect.

Optionally, in an implementation, the chip may further include a memory. The memory stores instructions. The processor is configured to execute the instructions stored in the memory. When the instructions are executed, the processor is configured to perform the method according to any one of the first aspect or the implementations of the first aspect.

According to a seventh aspect, a computer program product including instructions is provided. When the instructions are run by a compute device, the compute device is enabled to perform the method according to any one of the first aspect or the implementations of the first aspect.

According to an eighth aspect, a computer program product including instructions is provided. When the instructions are run by a compute device cluster, the compute device cluster is enabled to perform the method according to any one of the first aspect or the implementations of the first aspect.

According to a ninth aspect, a computer-readable storage medium is provided, and includes computer program instructions. When the computer program instructions are executed by a compute device, the compute device performs the method according to any one of the first aspect or the implementations of the first aspect.

For example, the computer-readable storages include but are not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard disk drive).

Optionally, in an implementation, the foregoing storage medium may be specifically a non-volatile storage medium.

According to a tenth aspect, a computer-readable storage medium is provided, and includes computer program instructions. When the computer program instructions are executed by a compute device cluster, the compute device cluster performs the method according to any one of the first aspect or the implementations of the first aspect.

For example, the computer-readable storages include but are not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard disk drive).

Optionally, in an implementation, the foregoing storage medium may be specifically a non-volatile storage medium.

### BRIEF DESCRIPTION OF DRAWINGS

FIG. 1 is a block diagram of a cloud scenario to which an embodiment of this application is applicable;
FIG. 2 is a schematic flowchart of a method for executing a security policy by an SQL engine according to an embodiment of this application;
FIG. 3 shows a correspondence between a plurality of data security policies of an SQL engine and security policy sources according to an embodiment of this application;
FIG. 4 is a block diagram in which different types of data security policies configured for an SQL engine respectively correspond to software sources according to an embodiment of this application;
FIG. 5 is a schematic flowchart of executing a security policy by an SQL engine according to an embodiment of this application;
FIG. 6 is a block diagram of an SQL engine 600 according to an embodiment of this application;
FIG. 7 is a block diagram of a database system 700 according to an embodiment of this application;
FIG. 8 is a diagram of an architecture of a compute device 1500 according to an embodiment of this application;
FIG. 9 is a diagram of an architecture of a compute device cluster according to an embodiment of this application; and
FIG. 10 is a diagram in which compute devices 1500A and 1500B are connected via a network according to an embodiment of this application.

### DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are for representing giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, "related (corresponding, related)" and "corresponding (corresponding)" may be sometimes used interchangeably. It should be noted that meanings expressed by the terms are consistent when a difference between the terms is not emphasized.

A service scenario described in embodiments of this application is intended to describe the technical solutions in embodiments of this application more clearly, and does not constitute a limitation on the technical solutions provided in embodiments of this application. A person of ordinary skill in the art can learn that the technical solutions provided in embodiments of this application are also applicable to a similar technical problem with evolution of a network architecture and emergence of a new service scenario.

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

For ease of description, concepts in embodiments of this application are first explained below.

### 1. Structured query language (structured query language, SQL) engine

The SQL engine (SQL engine) is a software component configured to process SQL queries, serving as one of the core components of a database management system (database management system, DBMS).

The following describes the main functions of the SQL engine:
(1) parsing SQL statements: converting SQL statements into an internal representation, namely, a parsing tree;
(2) optimizing a query plan: optimizing the parsing tree to generate an efficient query execution plan;
(3) executing the query plan: executing a query based on the query plan and retrieving results from data stored in a database; and
(4) returning results: returning query results to a client application.

The following provides several common SQL engines.
(1). A Hive engine, as a Hadoop-based data warehouse tool, is used to extract, transform, and load data. This is a mechanism for storing, querying, and analyzing large-scale data stored in Hadoop.
(2). A Spark engine is a fast and universal computing engine designed for large-scale data processing.
(3). A Presto engine is an open-source distributed SQL query engine launched by Facebook, supporting GB-scale to PB-scale data, and mainly used for second-level queries.
(4) A Trino engine is an analytics engine designed for OLAP to efficiently perform distributed queries on massive amounts of data. The Trino engine and the Presto engine are two branches of the same open-source ecosystem.

### 2. Data security

Data security is used to protect security and privacy of data stored in a database, to prevent data leakage, data misuse, and/or the like. Specifically, data security may be classified into engine-layer data security and storage-layer data security.

The engine-layer data security is to protect, by executing a data security policy by an SQL engine, security and privacy of data stored in the database.

The following describes several common data security policies.

### (1) Data access permission control (data access permission control) security policy

The data access permission control security policy defines permissions for data access. Dimensions of the definition are: data source, database, table, and column (in descending order).

### (2) Data masking (data masking) security policy

The data masking security policy generally defines a corresponding data masking policy (which can be implemented by a specific function) for a user to access a specific column of a specific table. In this way, different people can view different content of same data, and sensitive data is invisible to users with low permissions.

It should be understood that data masking is a technical approach for protecting personal privacy, and a main purpose of data masking is to perform confidential processing on sensitive information while ensuring use and validity of data, thereby preventing a security risk caused by data leakage. Data masking can hide or change some information of sensitive data, thereby reducing data leakage risks and protecting personal privacy and data security. Implementation of data masking needs to follow the following two principles: 1. to preserve meaningful information for masked applications as much as possible; and 2. to prevent cracking by hackers to the maximum extent. Data masking can be classified into static data masking and dynamic data masking. The static data masking is to mask sensitive information in original data before providing the data to relevant personnel for use. This ensures that sensitive information is not leaked during use of the data. Dynamic data masking is to mask sensitive information in real time during data transmission to ensure that sensitive information is not obtained by unauthorized personnel during data transmission.

### (3) Data row-level filtering (row-level filtering) security policy

The data row-level filtering security policy is to filter each row of data during data processing and retain only the data rows that meet specific conditions, thereby controlling users to access only specific data rows in a data table.

### 3. Software that provides a data security policy

The software that provides a data security policy may also be referred to as a source of a data security policy, and is configured to provide the foregoing data security policies for an SQL engine. Types of data security policies provided by different software may be the same or may be different.

The following describes several common pieces of software that provide data security policies.

### (1) Apache Ranger

Apache Ranger may also be referred to as Ranger for short. Apache Ranger is an open-source component related to Hadoop security and provides a comprehensive data security management framework.

Apache Ranger has rich security-related functions and provides more refined management and control. Specifically, Apache Ranger provides the following three types of data security policies for an SQL engine: a data access permission control security policy, a data masking security policy, and a data row-level filtering security policy.

### (2) Hive Metastore (Hive Metastore, HMS)

Hive Metastore is the place where metadata is stored in Hive. Hive is a Hadoop-based data warehouse tool that maps structured data files to a database table and provides SQL-like query functions. Hive metadata includes descriptions of tables, databases, partitions, buckets, among other information. The information is stored in a metadata database.

In Hive, metadata is stored in a relational database management system (relational database management system, RDBMS) such as MySQL and Derby. Hive uses embedded Derby to store metadata, and Metastore provides a metadata service and is responsible for managing access of clients to metadata. Hive Metastore can be stored in a Hadoop distributed file system (Hadoop distributed file system, HDFS) and associated with data and metadata in the data warehouse.

In Hive, metadata is managed independently of data and can be accessed and operated through the metadata service. Hive Metastore may facilitate management and maintenance of metadata information such as tables, databases, partitions, and buckets in Hive, thereby ensuring data integrity and consistency.

### (3) Hive access control list (access control list, ACL)

At present, ensuring data security and privacy is extremely important for enterprise-level applications. As a bottom-layer computing engine in a data stack, an engine (for example, an SQL engine) in a database system must ensure that data is accessible only to authorized personnel, preventing data leakage and misuse. Specifically, a data security policy is configured for the SQL engine, so that the SQL engine can protect data security and privacy according to the configured data security policy.

In related technical solutions, for an SQL engine, if the SQL engine relies on software (for example, Apache Ranger) that provides data security policies, all data security policies configured on the SQL engine must depend on that software (for example, Apache Ranger). That is, if a data access permission control security policy used by the SQL engine is provided by Apache Ranger, all other security policies such as a data masking security policy and a data row-level filtering security policy must be provided by Apache Ranger. As a result, the security policies in the SQL engine are strongly bound to software (software that provides a data security policy), making the current data security system relatively rigid and making it impossible for the SQL engine to flexibly use data security policies provided by different software, thereby reducing user experience.

In view of this, an embodiment of this application provides a method for executing a security policy by an SQL engine. The method enables an SQL engine to flexibly use data security policies provided by different software, and avoids a strong binding relationship between all types of data security policies on the SQL engine and one piece of software, so that a data security system is flexible, thereby improving user experience.

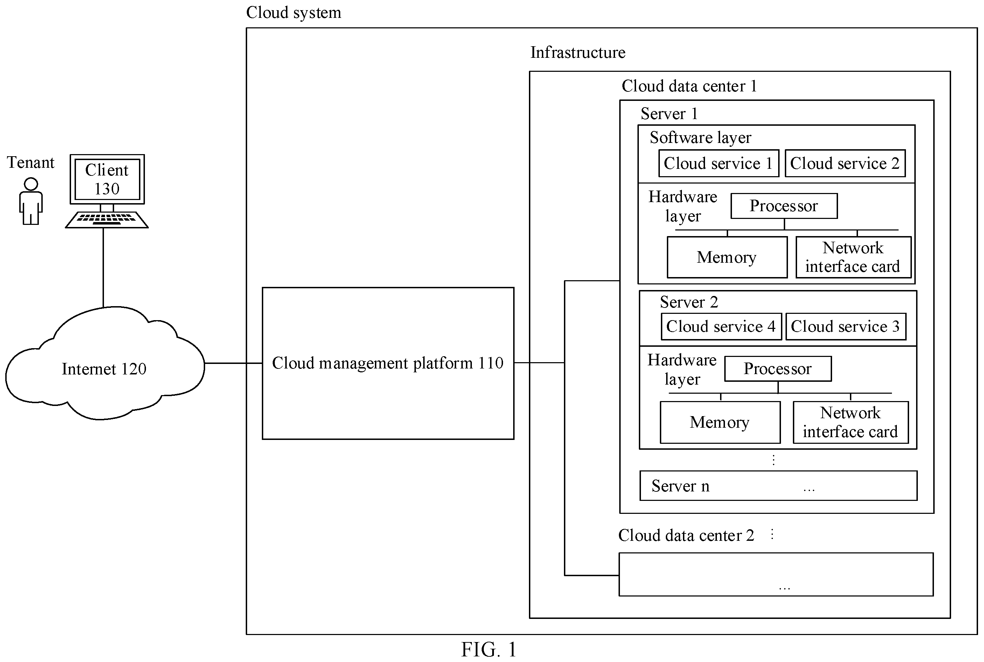

In a possible implementation, the method provided in this embodiment of this application may be applied to a cloud service scenario. For ease of description, the following first describes the cloud service scenario in detail with reference to FIG. 1.

FIG. 1 is a block diagram of a cloud scenario to which an embodiment of this application is applicable. As shown in FIG. 1, the cloud scenario may include a cloud management platform 110, an Internet 120, and a client 130.

As shown in FIG. 1, the cloud management platform 110 is configured to manage infrastructure that provides a plurality of cloud services. The infrastructure includes a plurality of cloud data centers. Each cloud data center includes a plurality of servers. Each server includes a cloud service resource, to provide a corresponding cloud service for a tenant.

Specifically, an SQL engine runs on the server in the cloud data center, and the SQL engine performs the method provided in this embodiment of this application.

The cloud management platform 110 may be located in the cloud data center, and may provide an access interface (for example, an interface or an application programming interface (application programming interface, API)). The tenant may operate the client 130 to remotely access the access interface, to register a cloud account and a password on the cloud management platform 110 and log in to the cloud management platform 110. After the cloud management platform 110 successfully authenticates the cloud account and the password, the tenant may further pay on the cloud management platform 110 to select and purchase a virtual machine with a specific specification (processor, memory, and disk). After the payment for purchase succeeds, the cloud management platform 110 provides a remote login account and password of the purchased virtual machine, and the client 130 may remotely log in to the virtual machine, and install and run an application of the tenant in the virtual machine. Therefore, the tenant may create, manage, log in to, and operate the virtual machine in the cloud data center via the cloud management platform 110. The virtual machine may also be referred to as a cloud server (elastic compute service, ECS) or an elastic instance (different cloud service providers have different names).

It should be understood that the tenant of the cloud service may be an individual, an enterprise, a school, a hospital, an administrative agency, or the like.

Functions of the cloud management platform 110 include but are not limited to a user console, a computing management service, a network management service, a storage management service, an authentication service, and an image management service. The user console provides an interface or an API to interact with the tenant. The computing management service is used to manage servers on which a virtual machine and a container are run, and a bare-metal server. The network management service is used to manage a network service (for example, a gateway or a firewall). The storage management service is used to manage a storage service (for example, a data bucket service). The authentication service is used to manage a tenant account and password. The image management service is used to manage a virtual machine image. The tenant may use the client 130 to log in to the cloud management platform 110 through the Internet 120 to manage a rented cloud service.

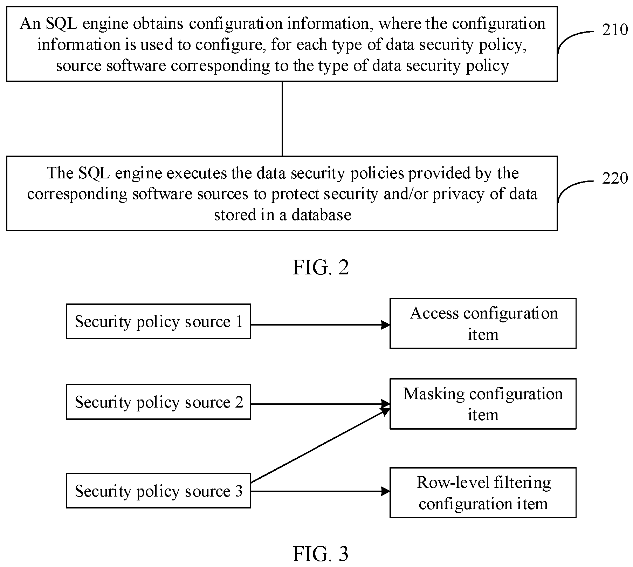

The following first describes in detail, with reference to FIG. 2, a method for executing a security policy by an SQL engine according to an embodiment of this application. It should be understood that an example in FIG. 2 is merely intended to help a person skilled in the art understand embodiments of this application, instead of limiting embodiments of this application to a specific value or a specific scenario of the example shown in FIG. 2. It is clear that a person skilled in the art may make various equivalent modifications or changes based on the following example provided in FIG. 2, and such modifications and changes also fall within the scope of embodiments of this application.

FIG. 2 is a schematic flowchart of a method for executing a security policy by an SQL engine according to an embodiment of this application. As shown in FIG. 2, the method may include steps 210 and 220. The following separately describes steps 210 and 220 in detail.

In an example, the method is applied to a database system, the database system includes a database and at least one SQL engine, and the at least one SQL engine is configured to obtain, based on an SQL statement, data stored in the database.

Step 210: The SQL engine obtains configuration information, where the configuration information is used to configure, for each type of data security policy, source software corresponding to the type of data security policy.

In this embodiment of this application, each SQL engine may be allowed to freely define different obtaining sources for a plurality of data security policies used or consumed by the SQL engine. In other words, for each type of data security policy, an obtaining source corresponding to the type of data security policy may be configured.

It should be understood that each type of data security policy may correspond to one obtaining source, or may correspond to a plurality of obtaining sources. This is not specifically limited in this application.

It should be further understood that obtaining sources corresponding to different types of data security policies may include a same obtaining source, or may not include a same obtaining source. This is not specifically limited in this application.

The obtaining source may also be referred to as a data security policy source, and may be understood as software that provides a data security policy. The software that provides a data security policy may include but is not limited to Apache Ranger, HMS, and Hive ACL.

It should be noted that, in addition to the SQL engine required for a service, a user needs to deploy more than one type of software that provides a data security policy.

The plurality of data security policies may include but are not limited to a data access permission control security policy, a data masking security policy, and a data row-level filtering security policy.

Optionally, in this embodiment of this application, each SQL engine may be further allowed to freely define whether to enable some or all of the plurality of data security policies.

In a possible implementation, an administrator may configure the different obtaining sources for the plurality of data security policies used by each SQL engine. There are a plurality of implementations for the configuration. This is not specifically limited in embodiments of this application. The following describes several possible implementations.
1. The administrator configures, using an interface of the SQL engine, the different obtaining sources for the plurality of data security policies used by the SQL engine.

Specifically, the administrator configures, using an application programming interface (application programming interface, API) of the SQL engine, the different obtaining sources for the plurality of data security policies used by the SQL engine.

In an example, if the SQL engine is located on a client, the SQL engine may be configured through this implementation.

2. The administrator configures, using a configuration file or a visual interface, the different obtaining sources for the plurality of data security policies used by the SQL engine.

In an example, if the SQL engine is located on a server, the SQL engine may be configured through this implementation.

For example, as shown in FIG. 3, an obtaining source configured by the administrator for a data access permission control security policy (which may also be referred to as an access configuration item for short) is a security policy source 1, obtaining sources configured for a data masking security policy (which may also be referred to as a masking configuration item for short) are a security policy source 2 and a security policy source 3, and an obtaining source configured for a data row-level filtering security policy (which may also be referred to as a row-level filtering configuration item for short) is the security policy source 3.

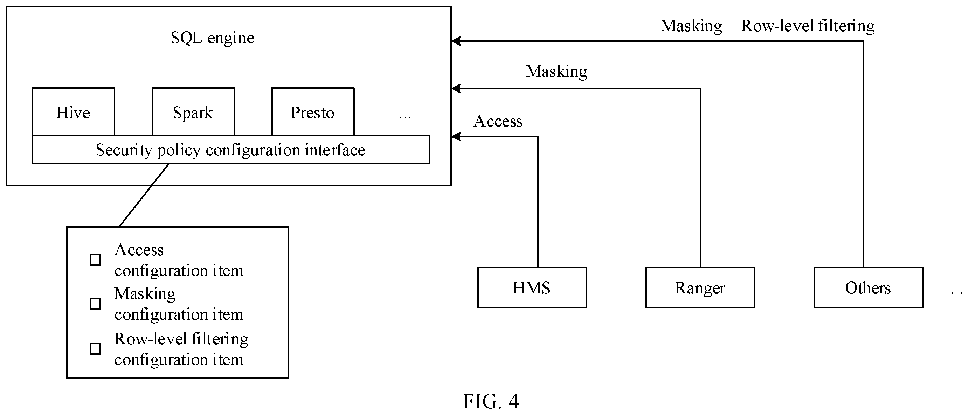

In this embodiment of this application, it is assumed that the security policy source 1 is HMS, the security policy source 2 is Apache Ranger, and the security policy source 3 is other software. As shown in FIG. 4, via a security policy configuration interface of the SQL engine, the obtaining source configured for the data access permission control security policy (which may also be referred to as the access configuration item for short) is HMS, the obtaining sources configured for the data masking security policy (which may also be referred to as the masking configuration item for short) are Apache Ranger and the other software, and the obtaining source configured for the data row-level filtering security policy (which may also be referred to as the row-level filtering configuration item for short) is the other software.

In other words, the data access permission control security policy used by the SQL engine is a data access permission control security policy provided by HMS, the data masking security policies used are data masking security policies provided by Apache Ranger and the other software, and the data row-level filtering security policy used is a data row-level filtering security policy provided by the other software.

The following uses an example in which the administrator configures the SQL engine using a configuration file to describe a specific implementation of the configuration file with reference to FIG. 4.

In a possible implementation, for example, when the SQL engine is Spark, the following parameters may be added to and saved in a system startup configuration file of Spark:
spark.ranger.plugin.authorization.enable=false;
spark.HMS.plugin.access.enable=true;
spark.ranger and others.plugin.masking.enable=true;
spark.others.plugin.row_level_filter.enable=true;
"spark.ranger.plugin.authorization.enable=false" indicates disabling of the data security policy provided by Ranger. "spark.HMS.plugin.access.enable=true" indicates enabling of the data access permission control security policy (access for short) provided by HMS; "spark.ranger and others.plugin.masking.enable=true" indicates enabling of the data masking security policies (masking for short) provided by Ranger and the other software; and "spark.others.plugin.row level filter.enable=true" indicates enabling of the data row-level filtering security policy (row-level filtering for short) provided by the other software.

It should be understood that, in the foregoing implementation, it is assumed that all data security policies in the SQL engine are provided by Ranger. Therefore, the data security policies provided by Ranger need to be disabled first before the data security policies provided by different sources are enabled.

Spark has two SQL task submission modes. Therefore, the user may configure the foregoing parameters in the following three positions:
(1) JDBC server of Spark;
(2). a local conf file of a Spark client; and
(3). command line parameters of Spark.

It should be noted that the foregoing description is provided using an example in which the SQL engine is Spark, and is applicable to all other SQL engines.

In another possible implementation, for example, when the SQL engine is Presto, the following parameters may be added to and saved in a system startup configuration file of Presto:
security.access.source=HMS;
security.masking.source=Ranger/others;
security.row_level_filter.source=others;
"security.access.source=HMS" indicates enabling of the data access permission control security policy (access for short) provided by HMS; "security.masking.source=Ranger/others" indicates enabling of the data masking security policy (masking for short) provided by the Ranger and the other software; and "security.row_level_filter.source=others" indicates enabling of the data row-level filtering security policy (row-level filtering for short) provided by the other software.

It should be noted that the foregoing description is provided using an example in which the SQL engine is Presto, and is applicable to all other SQL engines.

Step 220: The SQL engine executes the data security policies provided by the corresponding software sources to protect security and/or privacy of data stored in the database.

In this embodiment of this application, after obtaining the configuration information, the SQL engine may enable the data security policies based on the configuration information to protect security and/or privacy of data stored in the database.

In an implementation, for the data access permission control security policy, before obtaining the data from the database based on the SQL statement, the SQL engine may execute the data access permission control security policy to perform security verification on user access permissions to the database, thereby protecting security of the data stored in the database.

In another implementation, for the data masking security policy or the data row-level filtering security policy, after obtaining the data from the database based on the SQL statement, the SQL engine may execute the data masking security policy or the data row-level filtering security policy to perform masking or row-level filtering on the data stored in the database, thereby protecting privacy of the data stored in the database.

In this embodiment of this application, each type of data security policy may come from one type of software, or may come from two or more types of software. For data security policies of the same type that are provided by two or more types of software, in an execution process of the SQL engine, it is necessary to support simultaneous enforcement of the data security policies of the same type that are provided by the two or more types of software, that is, it needs to be determined whether the SQL engine can pass security verification against the data security policies of the same type that are provided by the two or more types of software. In this way, multiple security protections may be enforced simultaneously, thereby better protecting data security and/or privacy.

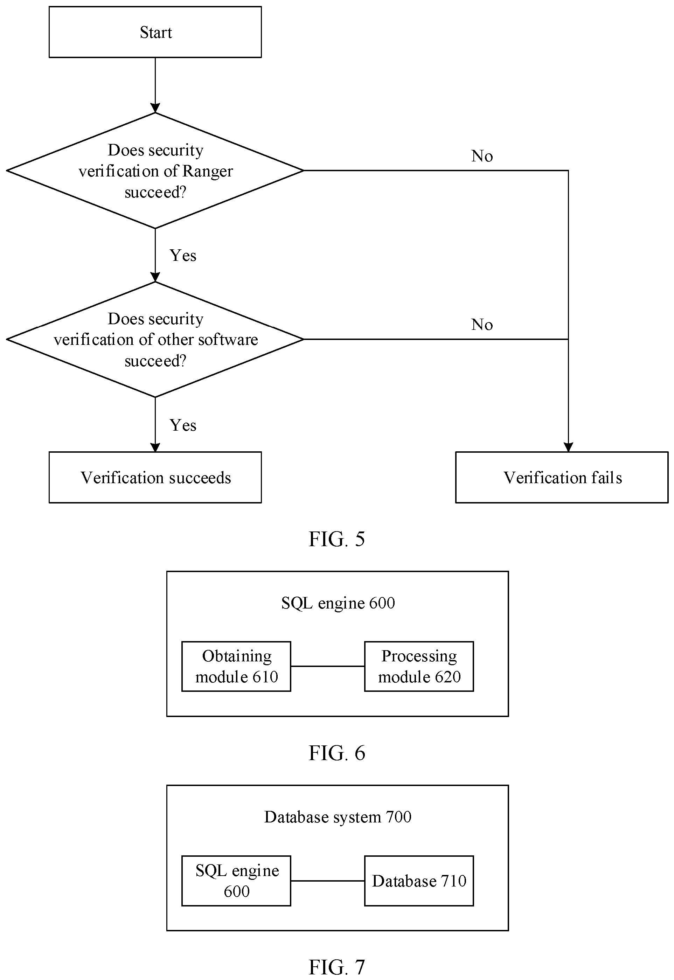

For example, the foregoing data masking security policy is used as an example. The security policy includes both a data masking security policy provided by Apache Ranger and a data masking security policy provided by the other software. As shown in FIG. 5, when executing the data masking security policies, the SQL engine needs to determine whether the SQL engine can pass security verification against the data masking security policy provided by Apache Ranger, and whether the SQL engine can pass the security verification against the data masking security policy provided by the other software.

In a case, in FIG. 5, for the data masking security policy, if the SQL engine passes both the security verification against the data masking security policy provided by Apache Ranger and the security verification against the data masking security policy provided by the other software, it may be understood that the verification succeeds.

In another case, in FIG. 5, if the SQL engine passes the security verification against the data masking security policy provided by Apache Ranger but fails to pass the security verification against the data masking security policy provided by the other software, it may be understood that the verification fails.

In another case, in FIG. 5, if the SQL engine passes the security verification against the data masking security policy provided by the other software but fails to pass the security verification against the data masking security policy provided by Apache Ranger, it may also be understood that the verification fails.

In another case, in FIG. 5, if the SQL engine neither passes the security verification against the data masking security policy provided by Apache Ranger nor passes the security verification against the data masking security policy provided by the other software, it may also be understood that the verification fails.

In the foregoing technical solution, the SQL engine can flexibly use data security policies provided by different software, and a strong binding relationship between all types of data security policies on the SQL engine and one piece of software is avoided, so that a data security system is flexible, thereby improving user experience.

The foregoing describes in detail the method provided in embodiments of this application with reference to FIG. 1 to FIG. 5. The following describes in detail apparatus embodiments in this application with reference to FIG. 6 to FIG. 9. It should be understood that descriptions in the method embodiments correspond to descriptions in the apparatus embodiments. Therefore, for a part that is not described in detail, refer to the foregoing method embodiments.

FIG. 6 is a block diagram of an SQL engine 600 according to an embodiment of this application. The SQL engine 600 may be implemented using software, hardware, or a combination thereof. The SQL engine 600 provided in this embodiment of this application may implement the method procedure shown in FIG. 2 in embodiments of this application. The SQL engine 600 includes an obtaining module 610 and a processing module 620. The obtaining module 610 is configured to obtain first configuration information, where the first configuration information indicates at least one software source corresponding to each of different types of security policy configurations executed on the SQL engine, and the at least one software source corresponding to each of the different types of security policies is not completely the same. The processing module 620 is configured to protect, based on the first configuration information, security and/or privacy of data stored in the database by executing the corresponding security policies provided by the different software sources indicated in the first configuration information.

Optionally, the obtaining module 610 is further configured to obtain the first configuration information in at least one of the following manners: an interface of the SQL engine, a configuration file of the SQL engine, or a visual configuration interface of the SQL engine.

Optionally, the different types of security policies include a first-type security policy, software sources corresponding to the first-type security policy include first software and second software, and the processing module 620 is further configured to: when verification of the first-type security policy respectively provided by the first software and the second software succeeds, determine that the SQL engine has passed security verification against the first-type security policy.

Optionally, the obtaining module 610 is further configured to obtain second configuration information, where the second configuration information is used to configure the SQL engine to execute some or all of the different types of security policies; and the processing module 620 is further configured to execute some or all of the different types of security policies based on the second configuration information.

Optionally, the different types of security policies include at least two of the following: a data access permission control security policy, a data masking security policy, and a data row-level filtering security policy.

Optionally, the software sources include Apache Ranger, Hive Metastore HMS, and Hive access control list ACL.

Optionally, the SQL engine 600 runs on at least one server, the at least one server is located in at least one cloud data center, and the at least one server is infrastructure that is managed by a cloud management platform and provides a cloud service.

The SQL engine 600 herein may be embodied in a form of a functional module. The term "module" herein may be implemented in a form of software and/or hardware, and this is not specifically limited.

For example, the "module" may be a software program, a hardware circuit, or a combination thereof that implements the foregoing functions. For example, the following uses the obtaining module 610 as an example to describe an implementation of the obtaining module 610. Similarly, for an implementation of another module, for example, the processing module 620, refer the implementation of the obtaining module 610.

The obtaining module 610 is used as an example of a software functional unit, and the obtaining module 610 may include code that is run on a compute instance. The compute instance may include at least one of a physical host (a compute device), a virtual machine, or a container. Further, there may be one or more compute instances. For example, the obtaining module 610 may include code that is run on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Usually, one VPC is set in one region. A communication gateway needs to be set in each VPC for communication between two VPCs in a same region or between VPCs in different regions. Interconnection between the VPCs is implemented through the communication gateway.

The obtaining module 610 is used as an example of a hardware functional unit, and the obtaining module 610 may include at least one compute device such as a server. Alternatively, the obtaining module 610 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), generic array logic (generic array logic, GAL), or any combination thereof.

A plurality of compute devices included in the obtaining module 610 may be distributed in a same region, or may be distributed in different regions. A plurality of compute devices included in the obtaining module 610 may be distributed in a same AZ, or may be distributed in different AZs. Similarly, a plurality of compute devices included in the obtaining module 610 may be distributed in a same VPC, or may be distributed in a plurality of VPCs. The plurality of compute devices may be any combination of compute devices such as a server, an ASIC, a PLD, a CPLD, an FPGA, and GAL.

Therefore, modules in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be noted that, when the SQL engine 600 provided in the foregoing embodiments performs the foregoing methods, division of the foregoing functional modules is only used as an example for description. During actual application, the foregoing functions may be allocated to different functional modules for implementation as required, to be specific, an inner structure of the SQL engine 600 is divided into different functional modules, to implement all or some of the functions described above. For example, the obtaining module 610 may be configured to perform any step in the foregoing methods, and the processing module 620 may be configured to perform any step in the foregoing methods. Steps implemented by the obtaining module 610 and the processing module 620 may be specified as required. The obtaining module 610 and the processing module 620 respectively implement different steps in the foregoing methods to implement all functions of the foregoing SQL engine 600.

In addition, the SQL engine 600 provided in the foregoing embodiments and the method embodiments belong to a same concept. For specific implementation processes thereof, refer to the foregoing method embodiments. Details are not described herein again.

FIG. 7 shows a database system 700 according to an embodiment of this application. The database system 700 includes a database 710 and at least one SQL engine 600. The at least one SQL engine 600 is configured to execute the foregoing different types of security policies when obtaining, based on an SQL statement, data stored in the database 710, so that the at least one SQL engine 600 protects security and/or privacy of the data stored in the database 710.

The method provided in embodiments of this application may be performed by a compute device, and the compute device may also be referred to as a computer system. The compute device may include a hardware layer, an operating system layer running above the hardware layer, and an application layer running above the operating system layer. The hardware layer includes hardware, for example, a processing unit, memory, and a memory control unit. Subsequently, functions and structures of the hardware are described in detail. The operating system is any one or more computer operating systems through a process (process), for example, a Linux operating system, a Unix operating system, an Android operating system, an iOS operating system, or a Windows operating system, that implement service processing. The application layer includes applications such as a browser, an address book, continuously software, and instant messaging software. In addition, optionally, the computer system is a handheld device, for example, a smartphone, or a terminal device, for example, a personal computer. This is not particularly limited in this application, provided that the method according to embodiments of this application can be implemented. The method provided in embodiments of this application may be performed by the compute device or a functional module that is in the compute device and that can invoke and execute a program.

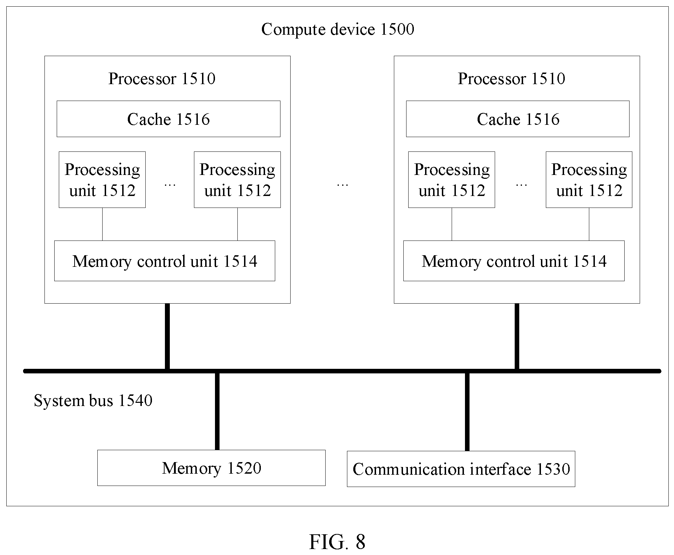

A compute device according to an embodiment of this application is described below in detail with reference to FIG. 8.

FIG. 8 is a diagram of an architecture of a compute device 1500 according to an embodiment of this application. The compute device 1500 may be a server, a computer, or another device with a computing capability. The compute device 1500 shown in FIG. 8 includes at least one processor 1510 and a memory 1520.

It should be understood that quantities of processors and memories in the compute device 1500 are not limited in this application.

The processor 1510 executes instructions in the memory 1520, so that the compute device 1500 implements the method provided in this application. Alternatively, the processor 1510 executes the instructions in the memory 1520, so that the compute device 1500 implements the functional modules provided in this application, to implement the method provided in this application.

Optionally, the compute device 1500 further includes a communication interface 1530. The communication interface 1530 uses a transceiver module, for example but not limited to, a network interface card or a transceiver, to implement communication between the compute device 1500 and another device or a communication network.

Optionally, the compute device 1500 further includes a system bus 1540. The processor 1510, the memory 1520, and the communication interface 1530 are separately connected to the system bus 1540. The processor 1510 can access the memory 1520 through the system bus 1540. For example, the processor 1510 can read and write data or execute code in the memory 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified into an address bus, a data bus, a control bus, or the like. For ease of representation, only one thick line is for representing the bus in FIG. 8, but this does not mean that there is only one bus or only one type of bus.

In a possible implementation, a function of the processor 1510 is mainly to interpret instructions (or code) of a computer program and process data in computer software. The instructions of the computer program and the data in the computer software may be stored in the memory 1520 or a cache 1516.

Optionally, the processor 1510 may be an integrated circuit chip and has a signal processing capability. By way of example and not limitation, the processor 1510 is a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware assembly. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or a kernel, and is the most important component of the processor. The processing unit 1512 is made of monocrystalline silicon through a specific production process. All computation, command reception, command storage, and data processing of the processor are executed by the core. The processing unit independently runs program instructions, and increases a running speed of a program by using a parallel computing capability. Various processing units have fixed logic structures. For example, the processing unit includes logic units such as a level 1 cache, a level 2 cache, an execution unit, an instruction level unit, and a bus interface.

In an implementation example, the memory control unit 1514 is configured to control data exchange between the memory 1520 and the processing unit 1512. Specifically, the memory control unit 1514 receives a memory access request from the processing unit 1512, and controls access to the memory based on the memory access request. By way of example and not limitation, the memory control unit is a device, for example, a memory management unit (memory management unit, MMU).

In an implementation example, each memory control unit 1514 performs addressing for the memory 1520 through the system bus. In addition, an arbiter (not shown in FIG. 8) is configured in the system bus, and the arbiter is responsible for processing and coordinating contention-based access of a plurality of processing units 1512.

In an implementation example, the processing unit 1512 is in communication connection with the memory control unit 1514 through a connection line inside a chip, for example, an address line, to implement communication between the processing unit 1512 and the memory control unit 1514.

Optionally, each processor 1510 further includes a cache 1516, and the cache is a data exchange buffer (referred to as a cache). When the processing unit 1512 needs to read data, the processing unit 1512 first searches the cache for required data. If the required data is found, the processing unit 1512 directly reads the data. If the required data is not found, the processing unit 1512 searches the memory for the required data. Because the cache runs much faster than the memory, a function of the cache is to help the processing unit 1512 run faster.

The memory 1520 can provide running space for a process in the compute device 1500. For example, the memory 1520 stores a computer program (specifically, code of the program) for generating the process. After the computer program is run by the processor to generate the process, the processor allocates corresponding storage space to the process in the memory 1520. Further, the storage space further includes a text segment, an initial data segment, an uninitialized data segment, a stack segment, a heap segment, and the like. The memory 1520 stores, in the storage space corresponding to the process, data generated during running of the process, for example, intermediate data or process data.

Optionally, the memory is also referred to as memory, and a function of the memory is to temporarily store operation data in the processor 1510 and data exchanged with an external memory such as a hard disk. Provided that the computer runs, the processor 1510 schedules, to the memory for an operation, data on which the operation needs to be performed, and the processing unit 1512 sends a result after the operation is completed.

By way of example and not limitation, the memory 1520 is a volatile memory or a non-volatile memory, or may include both a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM) and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory 1520 in the system and method described in this specification is intended to include but is not limited to these memories and any memory of another proper type.

The listed structure of the compute device 1500 is merely an example for description, and this application is not limited thereto. The compute device 1500 in this embodiment of this application includes various types of hardware in a computer system in the conventional technology. For example, the compute device 1500 further includes a memory other than the memory 1520, for example, a magnetic disk memory. A person skilled in the art should understand that the compute device 1500 may further include another component required for implementing normal running. In addition, a person skilled in the art should understand that, based on a specific requirement, the compute device 1500 may further include a hardware device implementing another additional function. In addition, a person skilled in the art should understand that the foregoing compute device 1500 may alternatively include only a component required for implementing embodiments of this application, and do not necessarily include all the components shown in FIG. 8.

An embodiment of this application further provides a compute device cluster. The compute device cluster includes at least one compute device. The compute device may be a server. In some embodiments, the compute device may be alternatively a terminal device, for example, a desktop computer, a notebook computer, or a smartphone.

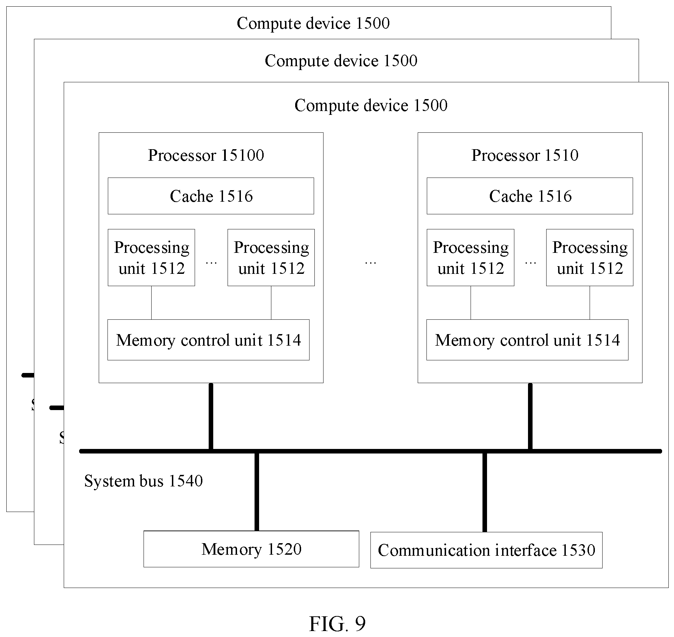

As shown in FIG. 9, the compute device cluster includes at least one compute device 1500. A memory 1520 of one or more compute devices 1500 in the compute device cluster may store same instructions for performing the foregoing method.

In some possible implementations, the memory 1520 of the one or more compute devices 1500 in the compute device cluster may alternatively store some instructions for performing the foregoing method separately. In other words, a combination of the one or more compute devices 1500 may jointly execute the instructions of the foregoing method.

It should be noted that memories 1520 in different compute devices 1500 in the compute device cluster may store different instructions respectively for performing some functions of the foregoing SQL engine. In other words, the instructions stored in the memories 1520 in different compute devices 1500 may implement functions of one or more modules in the foregoing SQL engine.

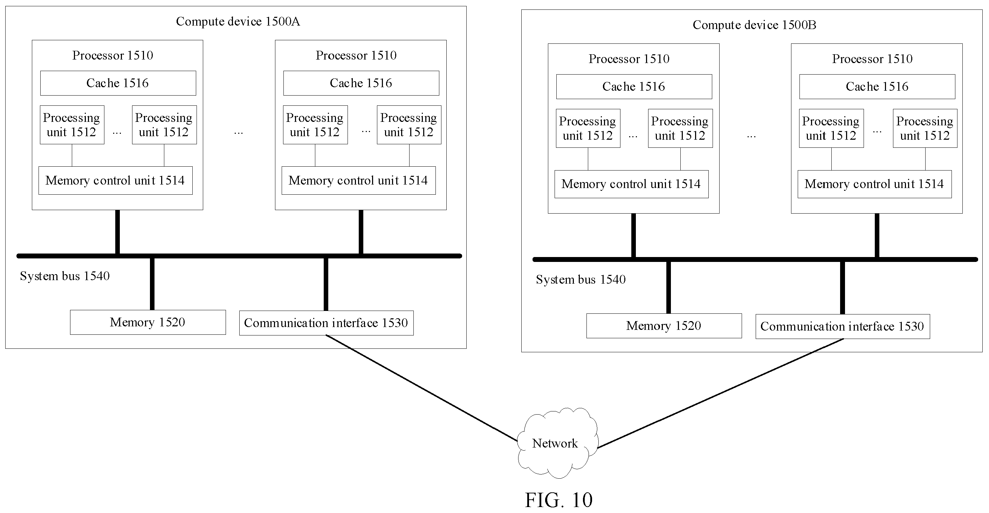

In some possible implementations, the one or more compute devices in the compute device cluster may be connected via a network. The network may be a wide area network, a local area network, or the like. FIG. 10 shows a possible implementation. As shown in FIG. 10, two compute devices 1500A and 1500B are connected via a network. Specifically, each compute device is connected to the network via a communication interface in the compute device.

It should be understood that functions of the compute device 1500A shown in FIG. 10 may be alternatively performed by a plurality of compute devices 1500. Similarly, a function of the compute device 1500B may be alternatively completed by a plurality of compute devices 1500.

In this embodiment, a computer program product including instructions is further provided. The computer program product may be software or a program product that includes the instructions and that can run on a compute device or that can be stored in any usable medium. When the computer program product runs on a compute device, the compute device is enabled to perform the method provided above, or the compute device is enabled to implement functions of the SQL engine provided above.

In this embodiment, a computer-readable storage medium is further provided. The computer-readable storage medium may be any usable medium that can be stored by a compute device, or a data storage device such as a data center, including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions. When the instructions in the computer-readable storage medium are executed on the compute device, the compute device is enabled to perform the method provided above.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, SQL engine, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the scope of protection of this application. Any variation or replacement readily figured out by a person skilled in the art within the technical scope disclosed in this application shall fall within the scope of protection of this application. Therefore, the scope of protection of this application shall be subject to the scope of protection of the claims.

## Claims

1. A method for executing a security policy by a structured query language SQL engine, wherein the method is applied to a database system, the database system comprises a database and at least one SQL engine, the at least one SQL engine is configured to obtain, based on an SQL statement, data stored in the database, and the method comprises:
obtaining, by each SQL engine, first configuration information, wherein the first configuration information indicates at least one software source corresponding to each of different types of security policy configurations for execution on the SQL engine, and the at least one software source corresponding to each of the different types of security policies is not completely the same; and
protecting, by the SQL engine based on the first configuration information, security and/or privacy of data stored in the database by executing the corresponding security policies provided by the different software sources indicated in the first configuration information.

2. The method according to claim 1, wherein obtaining, by each SQL engine, the first configuration information comprises:
obtaining, by the SQL engine, the first configuration information in at least one of the following manners: an interface of the SQL engine, a configuration file of the SQL engine, or a visual configuration interface of the SQL engine.

3. The method according to claim 1 or 2, wherein the different types of security policies comprise a first-type security policy, and software sources corresponding to the first-type security policy comprise first software and second software; and
protecting, by the SQL engine based on the first configuration information, security and/or privacy of the data stored in the database by executing the corresponding security policies provided by the different software sources indicated in the first configuration information comprises:
when verification of the first-type security policy respectively provided by the first software and the second software succeeds, determining, by the SQL engine, that the SQL engine has passed security verification against the first-type security policy.

4. The method according to any one of claims 1 to 3, wherein the method further comprises:
obtaining, by the SQL engine, second configuration information, wherein the second configuration information is used to configure the SQL engine to execute some or all of the different types of security policies; and
executing, by the SQL engine, some or all of the different types of security policies based on the received second configuration information.

5. The method according to any one of claims 1 to 4, wherein the different types of security policies comprise at least two of the following: a data access permission control security policy, a data masking security policy, and a data row-level filtering security policy.

6. The method according to any one of claims 1 to 5, wherein the software sources comprise Apache Ranger, Hive Metastore HMS, and Hive access control list ACL.

7. The method according to any one of claims 1 to 6, wherein the method is applied to a cloud management platform, the cloud management platform is configured to manage infrastructure that provides a cloud service, the infrastructure comprises at least one cloud data center, at least one server is disposed in each cloud data center, and the SQL engine runs on the at least one server.

8. A structured query language SQL engine, wherein the SQL engine is located in a database system, the database system further comprises a database, the SQL engine is configured to obtain, based on an SQL statement, data stored in the database, and the SQL engine comprises:
an obtaining module, configured to obtain first configuration information, wherein the first configuration information indicates at least one software source corresponding to each of different types of security policy configurations for execution on the SQL engine, and the at least one software source corresponding to each of the different types of security policies is not completely the same; and
a processing module, configured to protect, based on the first configuration information, security and/or privacy of data stored in the database by executing the corresponding security policies provided by the different software sources indicated in the first configuration information.

9. The SQL engine according to claim 8, wherein the obtaining module is further configured to:
obtain the first configuration information in at least one of the following manners: an interface of the SQL engine, a configuration file of the SQL engine, or a visual configuration interface of the SQL engine.

10. The SQL engine according to claim 8 or 9, wherein the different types of security policies comprise a first-type security policy, and software sources corresponding to the first-type security policy comprise first software and second software; and
the processing module is further configured to:
when verification of the first-type security policy respectively provided by the first software and the second software succeeds, determine that the SQL engine has passed security verification against the first-type security policy.

11. The SQL engine according to any one of claims 8 to 10, wherein
the obtaining module is further configured to obtain second configuration information, wherein the second configuration information is used to configure the SQL engine to execute some or all of the different types of security policies; and
the processing module is further configured to execute some or all of the different types of security policies based on the second configuration information.

12. The SQL engine according to any one of claims 8 to 11, wherein the different types of security policies comprise at least two of the following: a data access permission control security policy, a data masking security policy, and a data row-level filtering security policy.

13. The SQL engine according to any one of claims 8 to 12, wherein the software sources comprise Apache Ranger, Hive Metastore HMS, and Hive access control list ACL.

14. The SQL engine according to any one of claims 8 to 13, wherein the SQL engine runs on at least one server, the at least one server is located in at least one cloud data center, and the at least one server is infrastructure that is managed by a cloud management platform and provides a cloud service.

15. A database system, wherein the database system comprises a database and at least one SQL engine according to any one of claims 8 to 14, and the at least one SQL engine is configured to obtain, based on an SQL statement, data stored in the database.

16. A compute device cluster, comprising at least one compute device, wherein each compute device comprises a processor and a memory, wherein
the processor of the at least one compute device is configured to execute instructions stored in the memory of the at least one compute device, to enable the compute device cluster to perform the method according to any one of claims 1 to 7.

17. A computer program product comprising instructions, wherein when the instructions are run by a compute device cluster, the compute device cluster is enabled to perform the method according to any one of claims 1 to 7.

18. A computer-readable storage medium, comprising computer program instructions, wherein when the computer program instructions are executed by a compute device cluster, the compute device cluster performs the method according to any one of claims 1 to 7.
